(19) Europäisches Patentamt
European Patent Office
Office européen des brevets

(11) Veröffentlichungsnummer: **0 032 663**
**B1**

(12) **EUROPÄISCHE PATENTSCHRIFT**

(45) Veröffentlichungstag der Patentschrift: **13.04.83**

(51) Int. Cl.³: **C 07 F 9/38**, C 07 F 9/40

(21) Anmeldenummer: **81100040.5**

(22) Anmeldetag: **07.01.81**

(54) **Verfahren zur Herstellung von Vinylphosphonsäurederivaten.**

(30) Priorität: **19.01.80 DE 3001894**

(43) Veröffentlichungstag der Anmeldung: **29.07.81 Patentblatt 81/30**

(45) Bekanntmachung des Hinweises auf die Patenterteilung: **13.04.83 Patentblatt 83/15**

(84) Benannte Vertragsstaaten: **BE CH DE FR GB IT LI NL**

(56) Entgegenhaltungen:
**EP-A-0 002 733**
**DE-A-2 127 821**
**CHEMICAL ABSTRACTS, Band 78, Nr. 5, 5. Februar 1973, Seite 517, Nr. 29 900 q, Columbus, Ohio, USA, M. YAMAGAMI et al.: »gamma-Induced addition of dialkyl phosphites to olefins and pyrolysis of the 1 : 1 adducts«**

(73) Patentinhaber: **HOECHST AKTIENGESELLSCHAFT**, ***Postfach 80 03 20, D-6230 Frankfurt/Main 80 (DE)***

(72) Erfinder: **Dürsch, Walter, Dr., In der Braubach 4, D-6240 Königstein/Taunus (DE)**
Erfinder: **Kleiner, Hans-Jerg, Dr., Altkönigstrasse 11a, D-6242 Kronberg/Taunus (DE)**

**EP 0 032 663 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Vinylphosphonsäurederivaten

Vinylphosphonsäurederivate können bekanntlich aus 2-Chlorethanphosphonsäurederivaten gewonnen werden. Die Synthese dieser 2-Chlorethanphosphonsäurederivate ist aber technisch aufwendig. Technisch einfacher verläuft die Synthese von 2-Acetoxyethanphosphonsäurediestern aus Vinylacetat und Dialkylphosphiten (DE-OS 2 127 821). Aus dem 2-Acetoxyethanphosphonsäuredimethylester kann man dann durch Abspaltung von Essigsäure bei 550° C in ca. 50%iger Ausbeute Vinylphosphonsäuredimethylester gewinnen (M. Yamagami et al., Nippon Kagaku Kaisha, 10, 1991 [1972]). Erwünscht ist nun ein einfacheres Verfahren, aus 2-Acetoxyethanphosphonsäurediestern Vinylphosphonsäurederivate herzustellen.

Es wurde nun überraschenderweise gefunden, daß man auf einfache und wirtschaftliche Weise Vinylphosphonsäurederivate der allgemeinen Formel

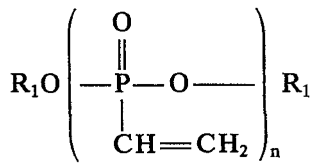

worin $R_1$ Wasserstoff oder Alkylgruppen mit 1 bis 4, bevorzugt 1 bis 2 Kohlenstoffatomen bedeutet und n 1 oder 2 ist, herstellen kann, indem man 2-Acetoxyethanphosphonsäuredialkylester der allgemeinen Formel

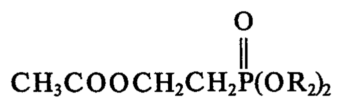

worin $R_2$ Alkylgruppen mit 1 bis 4, bevorzugt 1 bis 2 Kohlenstoffatomen bedeutet, in Gegenwart saurer oder basischer Katalysatoren auf 150 – 270° C, vorzugsweise 170 – 230° C, erhitzt, wobei Alkylacetat der allgemeinen Formel

$CH_3COOR_2$,

worin $R_2$ die obengenannte Bedeutung hat, abspaltet.

Es ist überraschend, daß bereits in einem erheblich tieferen Temperaturbereich als bekannt Vinylphosphonsäurederivate gebildet werden und dabei insbesondere nicht Essigsäure sondern Alkylacetat abgespalten wird.

Als Ausgangsmaterialien kommen z. B. in Frage 2-Acetoxyethanphosphonsäuredimethyl-, -diethyl-, -diisopropyl- und -di-n-butylester. Besonders bevorzugt ist der 2-Acetoxyethanphosphonsäuredimethylester.

Als saure oder basische Katalysatoren kommen zahlreiche Verbindungen in Frage. Als saure Katalysatoren lassen sich verwenden:

A) Schwefelsäure oder Phosphorsäure;
B) halogenhaltige Carbonsäuren mit einem $P_{Ka}$-Wert <2,5 wie Dichloressigsäure, Trichloressigsäure, Trifluoressigsäure;
C) aromatische Sulfonsäuren mit einem $P_{Ka}$-Wert <2,5 wie Benzolsulfonsäure, p-Toluolsulfonsäure;
D) bevorzugt Phosphinsäuren mit 2 bis 18 Kohlenstoffatomen wie Dimethylphosphinsäure, Methylethylphosphinsäure, Dioktylphosphinsäure, Methylphenylphosphinsäure, Diphenylphosphinsäure;
E) besonders bevorzugt Phosphonsäuren mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure, 2-Acetoxyethanphosphonsäure, 2-Acetoxyethanphosphonsäuremonomethylester, Vinylphosphonsäure, Vinylphosphonsäuremonomethylester, Vinylphosphonsäuremonoethylester, Benzolphosphonsäure;
F) ebenfalls besonders bevorzugt Pyrophosphonsäuren oder deren Halbester wie Methanpyrophosphonsäure, Benzolpyrophosphonsäure, Vinylpyrophosphonsäure, Vinylpyrophosphonsäuremonoethylester;
G) sehr geeignet sind auch die sauren Reaktionsgemische, die bei dem erfindungsgemäßen Verfahren entstehen.

Als basische Katalysatoren lassen sich verwenden:

A) Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triethylphosphin, Tripropylphosphin, Tributylphosphin, Triphenylphosphin und Tris-(p-dimethylaminophenyl)-phosphin und die entsprechenden gemischten Amine, Phosphine, Phospholane und Phospholene wie Dimethylethylamin, Diethylbutylamin, N-Dimethylanilin, 4-Methyl-N-dimethylanilin, N-Diethylanilin, N,N-Tetramethylphenyldiamin oder N-Methylpyrrolidin; Methyldiethylphosphin, Dimethylpropylphosphin, Diethylbenzylphosphin, 1-Methylphospholen-3 und 1-Ethyl-3-methylphospholen-3;

B) quartäre Ammoniumsalze bzw. Phosphoniumsalze mit 3 bis 18 Kohlenstoffatomen wie Tetramethylammoniumchlorid oder -bromid, Tetraethylphosphoniumchlorid, Trimethylbenzylammoniumchlorid, Triethylbenzylammoniumchlorid, Triethylbenzylammoniumbromid, Trimethylbenzylphosphoniumchlorid, Triphenylethylphosphonium-2,4-diaminobenzolsulfonat;

C) heterocyclische Verbindungen mit aromatischem Charakter wie Pyridin, Chinolin, ihre verschiedenen Alkyl- und Dialkyl-, vorzugsweise Methyl- bzw. Dimethyl-derivate, Imidazol, N-Vinyl-imidazol, Benzthiazol, 2-Amino-6-ethoxy-benzthiazol, ferner Phosphabenzole;

D) Säureamide wie Dimethylformamid, N-Dimethylacetamid, N-Diethylpropionamid, N-Dimethylbenzamid, N-Methyl-pyrrolidon, N,N'-Tetramethylterephthalsäurediamid oder Harnstoffe wie Tetramethylharnstoff und Trimethylphenylharnstoff;

E) sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexylphosphinoxid, Triphenylphosphinoxid, Dimethylphenylphosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Dimethylphosphinoxid, Dimethylpyrrolidinyl-1-methylphosphinoxid, Triphenylphosphin-dichlorid, Dimethyldodecylphosphinsulfid, Triphenylphosphinimin, Dimethylchlormethylphosphindichlorid, N-2-Dimethylphosphinylethyl-methyl-acetamid, N-2-Dimethylphosphinyl-ethyl-methyl-amin, Phospholenoxid wie 1-Methylphospholen-1-oxid und 1-Ethyl-3-methyl-phospholen-1-oxid;

F) Amide der phosphinigen und phosphonigen Säure und der Phosphin- und Phosphonsäuren sowie ihrer Thioanaloga, wie Ethanphosphonsäure-bis-diethylamid, Methan-butanphosphinigsäure-dimethylamid, Diethylphosphinigsäureisobutylamid. Ferner Triamide der Phosphor- und der Thiophosphorsäure wie Hexamethylphosphorsäuretriamid.

Die Katalysatoren werden in Mengen von 0,01 bis 10, bevorzugt 0,1 bis 5 Gew.-%, eingesetzt. Bei Verwendung kurzkettiger Alkanphosphonsäuren mit bis zu 4 Kohlenstoffatomen, deren Monoalkylestern oder der bereits gewonnenen sauren Reaktionsgemische können auch größere Mengen von 10 bis 50 Gew.-% eingesetzt werden, da die bei dieser Arbeitsweise anfallenden Gemische an Vinyl- und Alkanphosphonsäurederivaten für sich interessante Zwischenprodukte darstellen können.

Das Verfahren wird im allgemeinen so durchgeführt, daß das Ausgangsprodukt mit dem Katalysator vermischt wird und auf die erforderliche Reaktionstemperatur von 150 bis 270° C, vorzugsweise 170 bis 230° C, gebracht wird.

Höhere Temperaturen sind möglich, bringen aber keinen Vorteil. Es besteht dann die Gefahr der verstärkten Bildung von Nebenprodukten, aber auch der Polymerisation.

Das sich abspaltende Alkylacetat destilliert dann zusammen mit geringen Mengen Alkanol und Dialkylether ab. Die Destillation erfolgt unter Normaldruck, gegebenenfalls unter Zuhilfenahme eines Inertgases, wie z. B. Stickstoff. Es kann jedoch im Einzelfall vorteilhaft sein, im Vakuum abzudestillieren. Die Abspaltung des Alkylacetats ist nach 2 bis etwa 20 Std. beendet. Es kann zweckmäßig sein, danach noch 1 bis 4 Std. bei der Reaktionstemperatur nachzurühren. Das Verfahren kann auch kontinuierlich gestaltet werden.

Es kann vorteilhaft sein, Polymerisationsinhibitoren, wie z. B. Hydrochinon, Hydrochinonmonomethylether 2-Acetoxyethanphosphonsäuremonomethylester oder Phenothiazin, zuzusetzen.

Geht man von 2-Acetoxyethanphosphonsäurediestern aus, die von ihrer Herstellung her mit geringen Mengen des entsprechenden Monoesters verunreinigt sind, ist ein weiterer Zusatz eines Katalysators nicht notwendig. Es ist dabei zweckmäßig, die Reaktion bei etwa 250°C zu beginnen. Wenn sich dann das saure Reaktionsprodukt, das ja ebenfalls als Katalysator für die Reaktion wirkt, in genügendem Ausmaß gebildet hat, kann man das Verfahren bei tieferen Temperaturen, beispielsweise bei 180 bis 220° C, weiterführen.

Das Reaktionsprodukt besteht im wesentlichen aus einem Gemisch von Vinylphosphonsäuredi- und -monoalkylester, Vinylphosphonsäure, Vinylpyrophosphonsäuredi- und -monoalkylester und Vinylpyrophosphonsäure. Die Anwesenheit weiterer Derivate der Vinylphosphonsäure, oligomerer Pyrophosphonsäuren, ist anzunehmen. Für die Praxis ist eine Isolierung der einzelnen Komponenten aus diesem Gemisch nicht erforderlich und man kann dieses Reaktionsgemisch daher direkt verwenden für die Herstellung von Produkten für die Flammhemmung. Vinylphosphonsäuremonomethylester, nach dem Verfahren der DE-OS 2 129 584 zur Herstellung von Vinyl- und/oder 2-Chlorethanphosphonsäuredichlorid. Will man aus dem erhaltenen Reaktionsgemisch die Einzelkomponenten in reiner Form isolieren, so neutralisiert man das Reaktionsgemisch zunächst in

einem geeigneten Lösungsmittel mit Alkali und trennt die ausgefallenen Salze von den Di-estern ab. Die Alkalisalze der Phosphonsäuren bzw. Pyrophosphonsäuren lassen sich durch fraktionierte Kristallisation von den Salzen der Phosphonsäuremonoester bzw. Pyrophosphonsäuremonoester trennen.

## Beispiel 1

200 g 2-Acetoxyethanphosphonsäuredimethylester und 1 g 4-Dimethylaminopyridin werden unter Rühren auf 225 bis 230° C erhitzt. Im Verlauf von 2 Std. destillieren über eine Kolonne 74 g Methylacetat (98% d. Th.) ab. In einer der Apparatur nachgeschalteten Kühlfalle sammeln sich 7 g niedrigsiedender Produkte. Es wird eine Stunde nachgerührt bei Reaktionstemperatur. Man erhält 118 g eines Reaktionsproduktes, das auf Grund des $^{1}H$—NMR-Spektrums ca. 85% Vinylphosphonsäurederivate enthält.

## Beispiel 2

200 g 2-Acetoxyethanphosphonsäuredimethylester und 10 g Triphenylphosphin werden unter Rühren auf 210 bis 225° C erhitzt. Im Verlaufe von 3,5 Std. destillieren 71 g Methylacetat (94% d. Th.) ab. Eine Stunde wird nachgerührt bei Reaktionstemperatur. Man erhält 124 g eines Reaktionsproduktes, das im wesentlichen 70% Vinylphosphonsäurederivate enthält.

## Beispiel 3

300 g 2-Acetoxyethanphosphonsäuredimethylester, die herstellungsmäßig 1 g 2-Acetoxyethanphosphonsäuremonomethylester enthalten, werden 1 Std. unter Rühren auf 246° C erhitzt, dann 3 Std. auf 220 bis 230° C. Es destillieren über eine Kolonne 108 g Methylacetat ab, die 2,4% Methanol und 2,5% Dimethylether enthalten. In einer der Apparatur nachgeschalteten Kühlfalle sammeln sich 6,5 g Methylacetat und 3 g Dimethylether. Nun wird 1 Std. bei 210 bis 230° C nachgerührt. In der der Apparatur nachgeschalteten Kühlfalle sammeln sich erneut 6 g niedrigsiedende Produkte. Es verbleiben 170 g eines Reaktionsgemisches, das im wesentlichen 70% Vinylphosphonsäurederivate enthält.

## Beispiel 4

300 g 2-Acetoxyethanphosphonsäuredimethylester und 6 g Phosphonsäuretrisdimethylamid werden während 7 Std. unter Rühren auf 200 bis 220° C erhitzt. Dabei destillieren 105 g Methylacetat über eine Kolonne ab. In einer der Apparatur nachgeschalteten Kühlfalle finden sich 8 g niedrigsiedender Produkte. Man erhält 182 g eines Reaktionsgemisches, das im wesentlichen aus Vinylphosphonsäurederivaten besteht.

## Beispiel 5

300 g 2-Acetoxyethanphosphonsäuredimethylester und 3 g Trimethylphosphinoxid werden 8,5 Std. unter Rühren auf 200 bis 220° C erhitzt. Dabei destillieren 93 g Methylacetat ab. In einer der Apparatur nachgeschalteten Kühlfalle sammeln sich 7,5 g niedrigsiedender Produkte. Es wird 1 Std. bei 215° C nachgerührt. Man erhält 180 g eines Reaktionsgemisches, das 6% Vinylphosphonsäuredimethylester, 17% Vinylphosphonsäuremonomethylester, 5% Vinylphosphonsäure, 2% Vinylpyrophosphonsäuredimethylester, 19% Vinylpyrophosphonsäuremonomethylester und 15% Vinylpyrophosphonsäure enthält, bezogen auf die Gesamtmenge der Phosphorsignale im $^{31}P$—NMR-Spektrum.

## Beispiel 6

300 g 2-Acetoxyethanphosphonsäuredimethylester und 6 g Dimethylformamid werden auf 215° C unter Rühren erhitzt. In 5 Std. und 35 Min. destillieren über eine Kolonne 104 g Methylacetat ab. In einer der Apparatur nachgeschalteten Kühlfalle sammeln sich 7,5 g niedrigsiedender Produkte. Man erhält 180 g eines Reaktionsgemisches, das 7% Vinylphosphonsäuredimethylester, 23% Vinylphosphonsäuremonomethylester, 7% Vinylphosphonsäure, 1% Vinylpyrophosphonsäuredimethylester, 17% Vinylpyrophosphonsäuremonomethylester und 16% Vinylpyrophosphonsäure enthält, bezogen auf die Gesamtmenge der Phosphorsignale im $^{31}P$—NMR-Spektrum.

Beispiel 7

200 g 2-Acetoxyethanphosphonsäurediethylester und 7 g Triphenylphosphin werden auf 200 bis 235° C unter Rühren 3 Std. erhitzt. Über eine Kolonne destillieren 79 g Ethylacetat ab. In einer der Apparatur nachgeschalteten Kühlfalle sammeln sich 4 g niedrigsiedender Produkte. Man erhält 109 g eines Reaktionsgemisches, das 23% Vinylphosphonsäurediethylester, 20% Vinylphosphonsäuremonoethylester und 23% Vinylphosphonsäure enthält, bezogen auf die Gesamtmenge der Phosphorsignale im $^{31}P$—NMR-Spektrum. Die Anteile an Pyrophosphonsäurederivaten wurden nicht bestimmt.

Beispiel 8

1180 g 2-Acetoxyethanphosphonsäuredimethylester und 20 g Vinylphosphonsäure werden unter Stickstoffatmosphäre auf 210 bis 220° C unter Rühren erhitzt. Innerhalb 9 Std. destillieren 476 g Methylacetat ab, die 1% Methanol und 4,6% Dimethylether enthalten. In einer der Apparatur nachgeschalteten Kühlfalle sammeln sich weitere 33 g niedrigsiedende Produkte, die im wesentlichen aus Dimethylether bestehen. Man erhält 685 g eines Reaktionsproduktes, das im wesentlichen 70% Vinylphosphonsäurederivate enthält.

Beispiel 9

1700 g 2-Acetoxyethanphosphonsäuredimethylester und 154 g des Reaktionsproduktes von Beispiel 8 werden unter Rühren 16 Std. auf 190 bis 195° C erhitzt. Es destillieren 687 g Methylacetat ab, die 6,8% Methanol und 0,2% Dimethylether enthalten. In einer der Apparatur nachgeschalteten Kühlfalle sammeln sich 35 g niedrigsiedende Produkte. Man erhält 1126 g eines Reaktionsproduktes, das im wesentlichen 70% Vinylphosphonsäurederivate enthält.

Beispiel 10

784,4 g 2-Acetoxyethanphosphonsäuredimethylester und 214 g des Reaktionsproduktes von Beispiel 9 werden 10 Std. unter Rühren auf 190 bis 195° C erhitzt. Dabei destillieren 296 g Methylacetat ab, die 3,4% Methanol und 0,2% Dimethylether enthalten. In einer der Apparatur nachgeschalteten Kühlfalle sammeln sich 41 g niedrigsiedende Produkte. Man erhält 649 g eines Reaktionsproduktes, das im wesentlichen 70% Vinylphosphonsäurederivate enthält.

**Patentanspruch**

Verfahren zur Herstellung von Vinylphosphonsäurederivaten der allgemeinen Formel

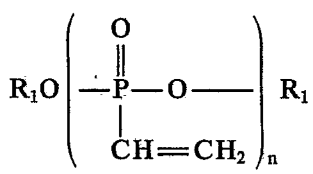

worin $R_1$ Wasserstoff oder Alkylgruppen mit 1 bis 4, bevorzugt 1 bis 2 Kohlenstoffatomen bedeutet und n 1 oder 2 ist, dadurch gekennzeichnet, daß man 2-Acetoxyethanphosphonsäuredialkylester der allgemeinen Formel

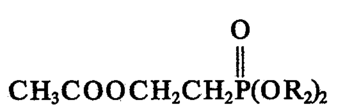

worin $R_2$ Alkylgruppen mit 1 bis 4, bevorzugt 1 bis 2 Kohlenstoffatomen bedeutet, in Gegenwart saurer oder basischer Katalysatoren auf 150—270° C, vorzugsweise 170—230° C, erhitzt.

**Claim**

Process for the manufacture of vinyl phosphonic acid derivatives of the general formula

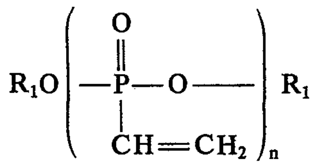

wherein $R_1$ is hydrogen or alkyl with 1 to 4, preferably 1 to 2 carbon atoms and n is 1 or 2, which is characterized by heating to 150–270° C, preferably to 170–230° C, 2-acetoxyethane phosphonic acid dialkyl ester of the general formula

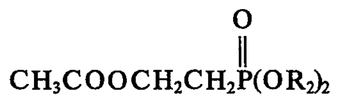

wherein $R_2$ is alkyl with 1 to 4, preferably 1 to 2 carbon atoms, in the presence of acide or basic catalysts.

**Revendication**

Procédé de préparation de dérivés de l'acide vinylphosphonique répondant à la formule générale:

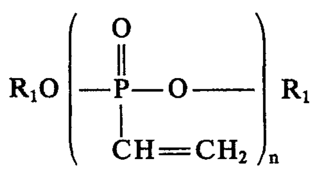

dans laquelle les $R_1$ représentent chacun un atome d'hydrogène ou un radical alkyle contenant de 1 à 4 atomes de carbone, de préférence 1 ou 2, et n est égal à 1 ou à 2, procédé caractérisé en ce qu'on chauffe des esters dialkyliques de l'acide acétoxy-2 éthane-phosphonique répondant à la formule générale:

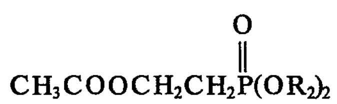

dans laquelle les $R_2$ représentent chacun un radical alkyle contenant de 1 à 4 atomes de carbone, de préférence 1 ou 2, en présence de catalyseurs acides ou basiques, à des températures de 150 à 270° C, de préférence de 170 à 230° C.